(19) **Europäisches Patentamt European Patent Office Office européen des brevets**

(11) **EP 4 570 751 A1**

(12) **EUROPEAN PATENT APPLICATION**

(43) Date of publication:
**18.06.2025 Bulletin 2025/25**

(21) Application number: **23383283.1**

(22) Date of filing: **13.12.2023**

(51) International Patent Classification (IPC):
***C01B 32/168*** (2017.01)     ***C01B 32/174*** (2017.01)

(52) Cooperative Patent Classification (CPC):
**C01B 32/168; C01B 32/174**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Consejo Superior De Investigaciones Científicas**
**28006 Madrid (ES)**

(72) Inventors:
• **Campoy Quiles, Mariano**
  **Barcelona (ES)**

• **Zapata Arteaga, Osnat**
  **Barcelona (ES)**
• **Ponrouch, Alexandre**
  **Barcelona (ES)**
• **Purkait, Taniya**
  **Barcelona (ES)**
• **Dörling, Bernhard**
  **Barcelona (ES)**
• **Álvarez Corzo, Iván**
  **Barcelona (ES)**

(74) Representative: **Pons**
**Glorieta Rubén Darío 4**
**28010 Madrid (ES)**

(54) **METHOD FOR OBTAINING MICRONS THICK, METER LONG CNTS BUCKYPAPER AND ITS USES IN THERMOELECTRICS AND AS CURRENT COLLECTOR OF A BATTERY**

(57)    The invention relates to a new method for preparing more than micron thick and meter-long carbon nanotube (CNT) buckypapers and more particularly using a roll-to-roll compatible fabrication approach. In addition, the buckypaper is obtained for the fabrication of the n- and p-type components of the thermoelectric module, as well as for electrode components in chemical storage devices through a post-deposition process involving partial oxidation of the CNTs and neutralization of the dopant.

**EP 4 570 751 A1**

# Description

The invention relates to a new method for preparing more than micron thick and meter-long carbon nanotube (CNT) buckypapers and more particularly using a roll-to-roll compatible fabrication approach. In addition, the buckypaper is obtained for the fabrication of the n- and p-type components of the thermoelectric module, as well as for electrode components in chemical storage devices through a post-deposition process involving selective oxidation of the CNTs and neutralization of its dopant.

## BACKGROUND ART

Carbon nanotubes (CNTs) are a class of material that exhibits good mechanical and electronic properties amongst other traits. As such, they hold promise as mechanical reinforcement materials, components in optoelectronic devices, and as energy materials (thermoelectrics, solar cells, batteries, etc.).

Organic thermoelectrics have emerged as a promising and rapidly evolving field in the realm of energy harvesting and conversion, utilizing organic semiconductors (OSC) to capture waste heat and convert it into usable electricity. While it is true that organic thermoelectric materials currently exhibit performance that is generally lower than that of their inorganic counterparts, they are often touted for other competitive advantages like abundance, ease of processability, and favorable mechanical properties. However, for organic thermoelectrics to establish their own niche and succeed, they must achieve significant milestones, including (i) high performance, (ii) long-term stability, and (iii) scalable manufacturing.

In terms of performance (i), an efficient thermoelectric material combines high electrical conductivity ($\sigma$), high Seebeck coefficient ($S$), and low thermal conductivity ($\kappa$). These parameters are material properties that comprise the dimensionless figure of merit, $ZT = S^2 \sigma \kappa^{-1} T$. Good performing inorganic-based thermoelectrics typically exhibit $ZT > 1$, while only a few demonstrations in the range of 0.1-0.4 are available for their organic counterparts. Perhaps the most relevant difference between organic and inorganic materials, from the perspective of thermoelectric conversion, is their substantially different electrical and thermal conductivities. For example, CNTs exhibit electrical conductivities ranging from 500 $\Omega$ cm$^{-1}$ to 10000 $\Omega$ cm$^{-1}$, with thermal conductivities between 20 W m K$^{-1}$ to 700 W m K$^{-1}$. On the other hand, conjugated polymers (CPs) typically exhibit electrical conductivities ranging from 0.01 $\Omega$ cm$^{-1}$ to 1000 $\Omega$ cm$^{-1}$, with thermal conductivities that are generally an order of magnitude lower, i.e. 0.1 W m K$^{-1}$ to 1 W m K$^{-1}$. Hence, significant efforts from several groups are aimed at improving the doping and processing methods of OSC to enhance their thermoelectric performance (ZT).

The main use of CNT in battery application is as carbon additive in composite electrodes. Indeed, most active materials in batteries (the material allowing for redox processes and thus charge / discharge) are poorly electronically conductive. Carbon additives are commonly used in overcoming such poor conductivity and ensuring an easy electron collection pathway between the individual active material particles and the current collector on which they are deposited. The most common carbon additive for electrode formulation is carbon black, usually in the form of small particles (tens of nm in diameter). Establishing a conducting pathway through the depth of the electrode ensures efficient charge collection. However, such a conducting network can be broken if active material particles experience large volume changes during cycling. CNTs (and/or carbon fibers) are sometimes used to ensure better long range conducting networks (several microns) that are less sensitive to volume changes during charge and discharge.

One major drawback of CNTs is, however, their difficulty to be processed, in particular, in film form. This is a consequence, in most cases, of the poor solubility of CNTs, which results in low concentrated dispersions. CNT mats, also known as Buckypaper, are normally made by filtering a large volume of a diluted dispersion of CNT through a filter. Upscaling this method is, however, extremely challenging and time consuming. Spray-coating CNTs is another possibility, although the low CNT content in the solution also means that depositing thick films is a very slow process.

## SUMMARY OF THE INVENTION

The present invention discloses a novel method to produce large area, meter-long thick films from solution by using a roll-to-roll compatible deposition technique.

A first aspect of the present invention is related to a method for preparing buckypaper formed by n-type carbon nanotubes (CNT) characterized in that comprising the following steps:

  a) preparing a dissolved CNT salt using a procedure comprising the following step:

    i) providing a stock solution of reductive alkali metal, preferably the alkali metal is selected from potassium or sodium, naphthalenide (Np) in a polar aprotic solvent, preferably the polar aprotic solvents are selected from dimethylacetamide (DMAc), dimethyl sulfoxide (DMSO) or tetrahydrofuran (THF);
    ii) adding in the solution of step (i) a non-oxidizing atmosphere CNTs with a median length of at least 500 nm;

  b) depositing the solution obtained in a) via roll-to-roll compatible deposition method onto a porous filter used as temporary substrate, preferably the temporary substrates are porous PTFE filter sheets, in presence of an oxidizing atmosphere at a pressure of between 0,8 and 1,5 bar;
c) removing the solvent and partially drying the wet buckypaper obtained in b) by applying a rough vacuum across the porous filter substrate; and
d) the pre-dried buckypaper is then dried completely by applying heat and/or rough vacuum, and then either left on its current substrate;

or the pre-dried buckypaper is delaminated to form a freestanding film;
or the pre-dried buckypaper is first transferred onto another final substrate, preferably the final substrates are selected from PET, PEN, polyimine, aluminum foil or paper, and then dried completely, preferably by applying heat and/or rough vacuum.

The term "buckypaper" as used herein is used interchangeably with "CNT film". They both refer to films composed of carbon nanotubes. Other materials (such as e.g. dopants, surfactants or other reaction products (in this particular case alkali metals like potassium or sodium as well as naphthalene) may also be present.

Typically, buckypapers have a length and width of at least 1cm, while their thickness may be less than about 1 mm.

The term "CNT or CNTs or carbon nanotube/s" as used herein refers to the one-dimensional allotrope of carbon. Essentially a hollow cylinder of rolled up graphene. A preferred example of CNTs for thermoelectric applications are single-walled CNTs with a high aspect ratio as well as purified single-walled CNTs with a well-defined chiral angle and/or a high aspect ratio.

A preferred example of CNTs for battery collector applications are single-walled or multi-walled CNTs with metallic character and/or a large length.

A preferred method to determine the distribution of CNT length, is by depositing their very dilute solutions onto a flat substrate and then using atomic force microscopy to directly measure the length of many individual CNTs.

The term "non-oxidizing atmosphere" as used herein refers to an inert, vacuum or reducing atmosphere, which lacks oxygen gas and other oxidizing gases (i.e., lacks gases with a high oxidation state or in which an oxidation reaction occurs). In particular, but not limited to, an inert $N_2$ atmosphere is used.

General advantages of the method of the present invention:

- As no surfactants or binders are used, the sheet resistance is low. The dried films can also be used as "substrates" for subsequent layer deposition (e.g. electrode in a battery) without the need for additional binders.
- CNT salt solutions are stable over years if kept in absence of oxidizing atmosphere (for example inside of a glovebox).
- When the solution comes in contact with air (step (b)) it gels, forming a thick wet viscous film. This is the most inventive step, since it allows to deposit very thick films very easily, from comparably dilute solutions.
- Roll-to-roll compatible, fast method to produce meter-long films (compared to typical filtered samples of about 2 cm in diameter). Thickness of the buckypaper obtained by the present method can be varied from less than one micron to centimeters.
- The drying step is much faster than that of conventional filtration, since more concentrated solutions can be used and therefore less liquid has to be removed.
- The resulting n-type material exhibits remarkable stability in air, even without any encapsulation. At room temperature, they retain 80 % of their power factor after 100 days and up to 30 % after 300 days. Under accelerated aging conditions at 180 °C in air, the power factor drops to 10 % of the initial value within the first 10 hours and further decreases to 8 % after 700 hours.
- Possibility to deposit thick films of gels at intermediate concentrations, where otherwise no gel would form, avoiding the drawbacks of highly concentrated solutions, since the gel is only formed as the solution comes in contact with air. Other methods that form gels require high concentrations, but because the gels are present at every step of the deposition, they lead to clogging and inhomogeneous films.

Thus, in a preferred embodiment the CNTs of step (i) are selected from single-walled CNTs with a high aspect ratio, purified single-walled CNTs with a well-defined chiral angle and/or a high aspect ratio and single-walled; or multi-walled CNTs with metallic character and/or a large length.

In another preferred embodiment step (i) is performed in the presence of a reducing or inert atmosphere, more preferably the inert atmosphere is a $N_2$ atmosphere.

In another preferred embodiment after step (ii) and before (b) step further comprising the following steps

iii) optionally washing the CNT salt in the same solvent of the step (i) and drying it, and
iv) dissolving the dried CNT salt in the same or a different polar aprotic solvent, preferably the polar aprotic solvents for this step are selected from DMAc or dimethyl sulfoxide (DMSO);

In a more preferred embodiment, the polar aprotic solvent in step iii) and iv) are THF and DMSO respectively.

In another preferred embodiment of the method of the present invention the molar ratio between the carbon bound in CNTs and the alkali metal naphthalenide in solution is between 1:1 and 10:1, and preferably between 3:1 to 5:1. These optimized ranges are chosen to obtain well-dissolved CNTs at a high concentration because within this range, the nanotubes disperse more effectively.

In another more preferred embodiment, the polar aprotic solvent in step iii) and iv) are THF and DMSO respectively, and wherein molar fraction between the CNTs and stock solution of reductive alkali metal naphthalenide is between 10:1 to 1:1, more preferably between 3:1 to 5:1.

In another preferred embodiment the median length of the CNTs of step (i) is at least equal to $1\mu m$.

In another preferred embodiment the median length of the CNTs is at least equal to $4\mu m$. The gel formation works better with longer nanotubes (the physical and electrical properties of the buckypaper also depend on the length).

In another preferred embodiment the CNT salt concentration obtained after step a) is between 0.02 - 5 mg/ml and preferably between 0.3-0.5 mg/ml. The advantages of said salt concentrations are that as such a solution comes in contact with air, it gels within a few seconds, forming a very viscous thick wet film. Higher concentrations may be difficult to reach, while at lower concentrations, the gelling-process would take too much time, or end up in a not sufficiently viscous film.

In another preferred embodiment the roll-to-roll method compatible technique in step b) is selected from slot-die-coating, blade-coating, inkjet printing, gravure printing or screen printing.

In another preferred embodiment the drying of step e) is carried out under rough vacuum at a pressure between 1-50 kPa and at a temperature of between 80 and 150 °C for a period time of between 10 min and 120 min.

In another preferred embodiment the pre-dried buckypaper is delaminated to form a freestanding film. The film then is left as a free-standing film with the advantageous over if the pre-dried buckypaper is transferred to a target substrate and then further dried, then shrank the film by a significant amount.

In another preferred embodiment, further a battery electrode material is deposited onto the freestanding buckypaper obtained in step (d).

In another more preferred embodiment, the battery electrode material is deposited via methods such as dip-coating, slot-die coating, blade-coating, spray coating or screen printing. In an even more preferred embodiment the battery electrode material deposited on the freestanding buckypaper is lithium titanate (LTO).

In another preferred embodiment, further comprises a new step of dedoping after the removing (c) step and before (d) step by oxidation at least one zone area of the buckypaper.

The advantage of said new step is the obtainment of p-type CNTs. P- and n- type areas can be patterned by locally dedoping the already formed single continuous film. This enormously simplifies the fabrication process of a thermoelectric generator whenever a single film should exhibit both p- and n-type characteristics in different areas.

In a more preferred embodiment, the oxidation is carried out by means of a photolysis reaction using $H_2O_2$ and UV light. In an even more preferred embodiment, the oxidation comprising immersing the buckypaper in $H_2O_2$ and placing the obtained buckypaper under a 250 nm, 60 W UV-lamp for 20 min. In an even further preferred embodiment, a protecting layer is patterned before the oxidation with a spray-coated layer of acrylic lacquer applied through a shadow mask, defining alternating areas that are protected and areas that will be oxidized. Even more preferably the method further comprising a new step of folding the buckypaper into a module with a zig-zag geometry, where preferably each fold is placed at an intersection between protected and oxidized buckypaper area.

The resulting alternating p-type and n-type segments can be folded together to form a fully interconnected thermoelectric module without the need for additional metallic interconnections.

A second aspect of the present invention is a buckypaper obtained by the method described before.

The advantages of the obtained buckypaper are that it is self-supporting and mechanically stable without requiring an additional substrate; that it has a high electrical conductivity >100 S/cm, a large area (on the order of 1m) and a large thickness up to $100\mu m$, allowing to reach sheet resistances of better than 1 $\Omega$.

A third aspect of the present invention is the use of the buckypaper of the present invention in organic thermoelectric generators.

The advantages of the buckypaper of the present invention as part of organic thermoelectric generators are that all three of n-type material, p-type material and electrical interconnects can be manufactured from the same continuous connected buckypaper, by selectively de-doping the buckypaper. As-prepared, the buckypaper exhibits a Seebeck coefficient S < 0 $\mu V/K$. After the dedoping step by oxidation, the buckypaper has S > 0 $\mu V/K$. The former can be used as an n-type material, while the latter can be used as a p-type legs for organic thermoelectric generators. At the same time, since both of them have a high electrical conductivity, either of them can be used as an electrical conductor forming the interconnections between the parts used as n-type and p-type legs. Compared to standard filtered buckypaper, the large area CNT film of this invention means that a large number of thermoelectric legs can be readily integrated into the generator. The material's flexibility is also a sought after trait for thermoelectrics. The thermal and chemical stability of the invention's buckypaper is advantageous compared to other n-type organic thermoelectric materials.

A fourth aspect of the present invention is the use of the buckypaper of the present invention as a current collector of a battery.

In a preferred embodiment, the buckypaper of the present invention is used as a substrate for an active material for a battery electrode.

In another preferred embodiment the buckypaper of the present invention is used as a substrate for an LTO film.

The combination of buckypaper and LTO has better capacity retention than LTO itself. With each cycle, an improvement in capacity can be observed.

The advantages of the use of buckypaper of the present invention as a current collector of batteries are:

- CNTs are more corrosion resistant than conventional current collectors like aluminium and stainless steel, which implies potentially higher operation voltages.
- CNT films can be more mechanically stable at a given weight than conventional current collectors like stainless steel or aluminium.
- CNTs films are porous, which could help the electrolyte reach the whole active layer of LTO. Therefore, LTO cast on buckypaper on aluminium substrate showed much better capacity and capacity retention than just LTO on Al; reflected by both discharge profile and comparative Nyquist plot, indicating better ionic and electronic transport when the CNT film is used (confirmed by Half-cell tests)
- The high thermal conductivity of the CNTs could be used to reduce Joule heating in the electrode. Generally, porosity/roughness helps to improve the contact between the electrode and the collector.
- In the collector of a battery, the buckypapers of the present invention serves to provide higher mechanical stability and additionally also have a very large surface area as compared to the traditional aluminium, making the aluminium superfluous.

A fifth aspect of the present invention is the use of the buckypaper as electrodes, sensors, capacitors, LEDs, solar cells, photodetectors, bolometers, supercapacitors, radiation shields, antistatic layer, or antennas.

A sixth aspect of the present invention is a battery comprising a collector, wherein the collector comprises the buckypaper obtained by method characterized in that comprising the following steps:

a) preparing a dissolved CNT salt using a procedure comprising the following step:

i) adding in non-oxidizing atmosphere CNTs with a median length of at least 500nm to a stock solution of reductive alkali metal naphthalenide (Np) in a polar aprotic solvent, preferably the alkali metal is selected from sodium or potassium and the polar aprotic solvents are selected from dimethylacetamide (DMAc) or tetrahydrofuran (THF);

b) depositing the solution obtained in a) via roll-to-roll compatible deposition method onto a porous filter used as temporary substrate, preferably the temporary substrates are porous PTFE filter sheets, in presence of an oxidizing atmosphere at a pressure of between 0,8 and 1,5 bar;

c) removing the solvent and partially drying the wet buckypaper obtained in b) by applying a rough vacuum across the porous filter substrate; and

d) the pre-dried buckypaper is then dried completely by applying heat and/or rough vacuum,

or the pre-dried buckypaper can be delaminated to form a freestanding film and then dried completely by applying heat and/or rough vacuum, or it can be transferred onto another final substrate, preferably the final substrates are selected from PET, PEN, polyimine, aluminum foil or paper and then dried completely by applying heat and/or rough vacuum.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings and sequence listing are provided by way of illustration and are not intended to be limiting of the present invention.

**BRIEF DESCRIPTION OF THE DRAWINGS**

**Fig. 1.** Scheme of method in example 2. (a) Relevant properties of CNTs and CPs for the fabrication of large-scale organic thermoelectric generators (b) Schematic representation of the fabrication process described in this work. The inset photograph shows a thick wet gel, which forms after deposition (c) Cross section of a folded and a photograph of a finished module, (d) Photograph of a ≈ 60 cm long CNT-film fabricated with the method depicted in (b).

**Fig. 2.** Anodic stability test. By CNT we refer to the buckypaper of this invention.

**Fig. 3.** Specific capacity measurement. By CNT we refer to the buckypaper of this invention.

**Fig. 4.** Thermoelectric properties of CNT films prepared using different carbon-to-potassium molar ratios. Previous art corresponds to reference [Dörling, B. et al. Soluble Alkali-Metal Carbon Nanotube Salts for n-Type Thermoelectric Composites with Improved Stability. Applied Physics Letters 2021, 118 (21), 213901.]

**Fig. 5.** Representative measurements for the Frequency domain thermoreflectance experiments conducted on a CNT film. (a) phase lag as a function $f_o$ the heating frequency. (b) Fit of the phase lag as a function of the spatial offset.

**Fig. 6.** (a) Binarization of an SEM image. (b) Calculation of the pore Feret diameter and equivalent circular diameter. (c) Estimation of the density of various pores and their cumulative volume.

## Examples

## Example 1

A stock solution of reductive potassium naphthalenide (K-Np) was prepared by mixing 0.83 mmol (32.5mg) of potassium (Merck, Sigma-Aldrich) and 1 mmol naphthalene (128mg) (Merck, Sigma-Aldrich) in 10 mL of dimethylacetamide (DMAc) and stirred for 3 h using a glass-covered magnetic bar. eDIPS CNTs (Meijo Nano Carbon) was dried inside a reactor beaker at 400 °C for 3 h under vacuum and then cooled for further use. The CNT-salts were prepared by mixing 30 mg dry CNTs with the K-Np stock solution at a carbon-to-potassium molar ratio of 3:1 and an intermediate concentration of 3 mg/ml of CNTs, and then diluting to reach a target concentration of 0.4 mg mL$^{-1}$. The solution was prepared in a glove box and stirred for at least three days before use.
Alternatively, the CNT-salt was prepared using the identical recipe, by simply exchanging eDIPS CNTs by TUBALL CNTs (from OCSiAl), which, according to the datasheet, have a length $l > 5 \mu m$.
Alternatively, the CNT-salt was prepared by using CoMoCAT CNTs at a higher target concentration of 2 mg mL$^{-1}$. According to their datasheet, CoMoCAT CNTs have a median length $l_m > 1.5 \mu m$
Alternatively, the solution can be prepared using different solvents. For example, the K-Np stock solution can be prepared in tetrahydrofuran (THF) before the CNTs are added. Then, the resulting CNT salt was filtered, washed with a copious amount of THF, and dried. Then, the CNT salt was redissolved in an appropriate amount of DMSO to reach a target concentration.
Alternatively, the solution can be prepared using sodium naphthalenide, which is preferred when preparing films for battery collectors.
CNT films were fabricated outside the glovebox to allow the formation of gel-like structures, which were then dried and transferred to a target substrate. 10 mL of the CNT-salt solution was deposited with a syringe through a custom 3D-printed slot-die onto a porous polytetrafluoroethylene (PTFE) filter sheet with 1 $\mu$m pore size that serves as a temporary substrate during deposition. Then, the CNT layer was dried by applying a vacuum from below the porous filter sheet. As the filter sheet passes above the vacuum section, most of the solvent is removed and the buckypaper starts to dry piece-wise. The CNT films were then transferred to the final polyethylene terephthalate (PET) substrate and completely dried under vacuum at 100 °C for 1 h. Using this approach, the manufactured films had a thickness between 400 nm-1000 nm, depending on the solution concentration and amount of solution used.

## Example 2

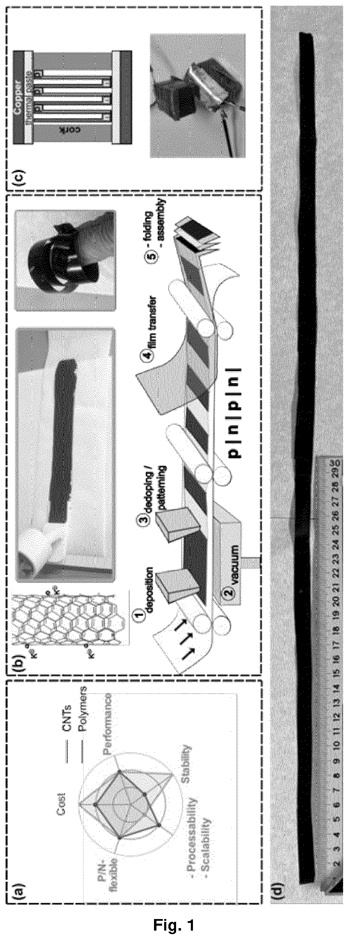

Performing the same steps as in example 1, it further comprises that single n-type obtained legs were cut into squares and contacted with silver paint. p-type legs were prepared by converting n-type sections of the film. This was achieved by immersing the films in $H_2O_2$ and placing it under a 250 nm, 60 W UV-lamp for 20 min. Consecutive n/p legs for the OTEG were fabricated from a single 10 by 1 cm$^2$ CNT films, which were dedoped/patterned in the same way. Before dedoping, designated n-type legs were protected with a spray-coated layer of acrylic lacquer applied through a shadow mask. Then, the film was folded into a finished module. (Process scheme in Figure 1.)

## Example 3

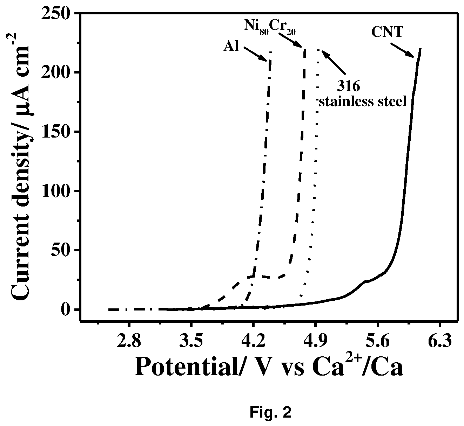

Ensuring the stability of the current collector is a significant step in battery applications since reactions at the current collectors (such as corrosion) may limit the operating window of the battery cell. Three conventional current collectors were studied for comparison along with the synthesized CNT free standing film in 0.3 M Ca(TF-SI)$_2$ electrolyte in 1:1 EC (ethylene carbonate): PC (propylene carbonate) solvent. CNT exhibits much better anodic stability (Figure 2) when compared to the other three, namely- Aluminum (Al), AISI 316 stainless steel and Ni$_{80}$Cr$_{80}$ alloy. Additionally, CNT brings the lowest weight penalty in practical applications as compared to the other substrates, making it a great choice for metal free current collector with highest operational potential.

## Example 4

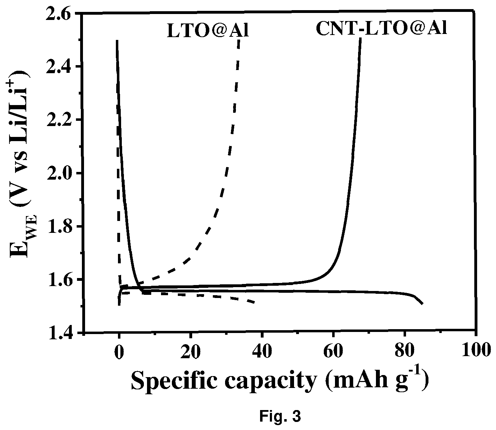

Swagelok cells in two-electrode configuration were used to compare the performance of a LTO (Li$_4$Ti$_5$O$_{12}$) active material, with and without the presence of the buckypaper (CNT) material, for subsequent application in batteries. In both cases, a Li metal disc was used as anode and LP40 [1 M Lithium hexafluorophosphate in 1:1 EC (ethylene carbonate): DEC (diethyl carbonate)] was used as the electrolyte. LTO coated on buckypaper on Al substrate showed much better specific capacity, capacity retention and power performances than just LTO on Al, reflected by their discharge profiles (Figure 3), indicating improved cation mass transport and electron collection when CNT film is used. This is because the CNT film is highly porous which ensures better wettability and accessibility of the whole active material by the electrolyte. The CNT porosity also enhances direct contact between the current collector and the active materials, improving electronic conductivity significantly.

**Example 5**

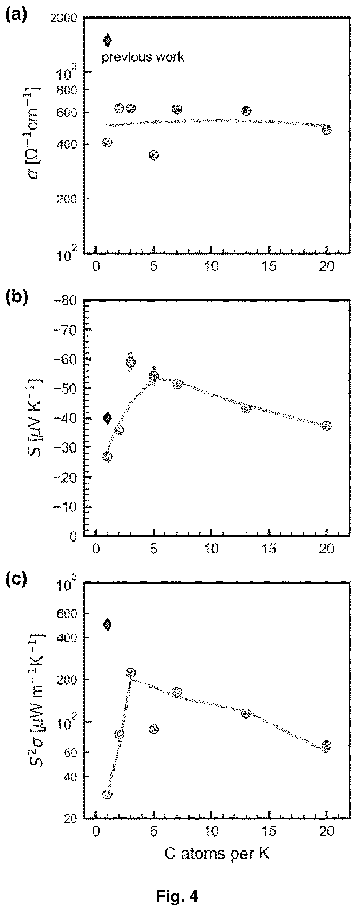

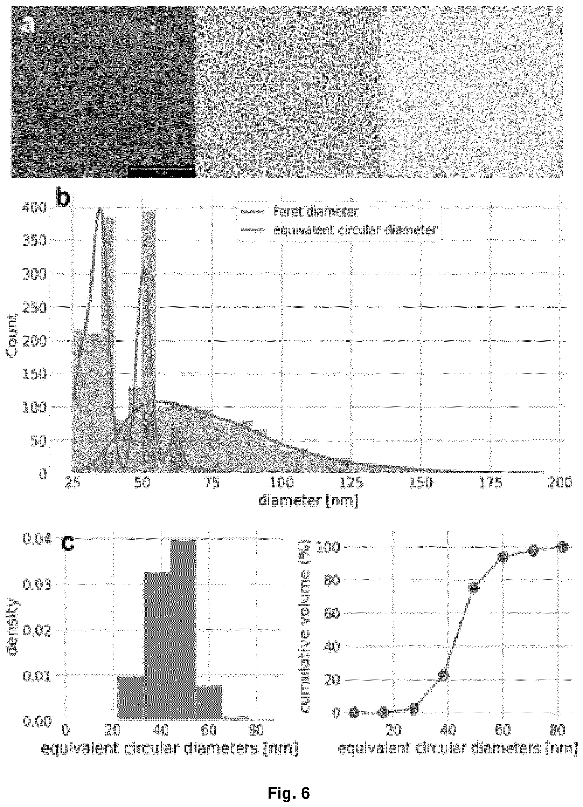

The impact of the carbon-to-potassium molar ratio on the thermoelectric properties has been examined with the goal of achieving a high absolute Seebeck coefficient and power factor. The results are displayed in Figure 4. While the electrical conductivity remains relatively constant, the optimal Seebeck coefficient and power factor are observed at a ratio of three carbon atoms per potassium. Compared to earlier work, the films in this work exhibit slightly lower electrical conductivity and power factor, which is attributed to the gelification and the resulting larger bundle size observed in this work, as well as a larger porosity (see Figure 6).

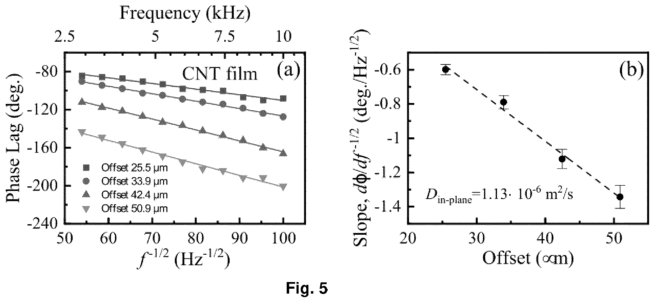

Finally, in order to calculate the figure of merit, we measured the in-plane thermal conductivity of the CNT films with a C:K ratio of three, using frequency domain thermoreflectance as shown in Figure 5. We have obtained a thermal conductivity of 10.07 W m K$^{-1}$, thus giving $zT \approx 0.01$. Noteworthy, the thermal conductivity we obtained is approximately half of that observed in a previous work. We tentatively ascribe this to a larger porosity (here, 55 %) in our films than what is normal for other buckypapers (between 11 % to 39 %). Yet, we highlight that this value is just an estimate, obtained using a method that employs the equivalent circular diameter of empty spaces in a SEM micrograph to calculate their cumulative volume by the Saltykov method which is particularly suitable for estimating the volume percentage of a given grain-size distribution taken from microscopy images. It makes the assumption that empty spaces in a SEM image are equivalent to a 'pore' that can be defined with an equivalent circular diameter (ECD).

$$ECD = 2 \cdot \sqrt{areas/\pi}$$

This can give different pore distributions for a given ECD, which then we use to estimate the cumulative volume of the pore with a highest frequency. All analysis was done with the Fiji imaged software (Figure 6).

**Claims**

1. Method for preparing buckypaper of n-type carbon nanotubes (CNT) **characterized in that** comprises the following steps:

   a) Preparing a dissolved CNT salt using a procedure comprising the following steps:

      i) providing a stock solution of reductive alkali metal, preferably the alkali metal is selected from potassium or sodium, naphthalenide (Np) in a polar aprotic solvent, preferably the polar aprotic solvents are selected from dimethylacetamide (DMAc), dimethyl sulfoxide (DMSO) or tetrahydrofuran (THF);
      ii) adding in the solution of step (i) a non-oxidizing atmosphere CNTs with a median length of at least 500nm;

   b) depositing the solution obtained in a) via roll-to-roll compatible deposition method onto a porous filter used as temporary substrate, preferably the temporary substrates are porous PTFE filter sheets, in presence of an oxidizing atmosphere at a pressure of between 0,8 and 1,5 bar;
   c) removing the solvent and partially drying the wet buckypaper obtained in b) by applying a rough vacuum across the porous filter substrate; and
   d) the pre-dried buckypaper is then dried completely by applying heat and/or rough vacuum, and then either left on its current substrate;

      or the pre-dried buckypaper is delaminated to form a freestanding film;
      or the pre-dried buckypaper is first transferred onto another final substrate, preferably the final substrates are selected from PET, PEN, polyimine, aluminum foil or paper, and then dried completely, preferably by applying heat and/or rough vacuum.

2. Method according to claim 1, wherein the alkali metal is selected from potassium or sodium, and the polar aprotic solvents are selected from dimethylacetamide, dimethyl sulfoxide or tetrahydrofuran.

3. Method according to any of claims 1 or 2, wherein after step (ii) and before (b) step further comprising the following steps:

      ii. washing the CNT salt in the same polar aprotic solvent from step a,i) and drying it.
      iii. redissolving the dried CNT salt in the same or a different polar aprotic solvent.

4. Method according to claim 3, wherein the polar aprotic solvent in step iii) and iv) are THF and DMSO respectively, and wherein molar fraction between the CNTs and stock solution of reductive alkali metal naphthalenide is between 10:1 to 1:1.

5. Method according to any of claims 1 to 4, wherein molar fraction between the CNTs and stock solution of reductive alkali metal naphthalenide is between 5:1 to 3:1.

6. Method according to any of claims 1 to 5, wherein the completely drying of step (d) is carried out under rough vacuum at a pressure between 1-50 kPa and at a temperature of between 80 and 150 °C for a period time of between 10 min and 120 min.

7. Method according to claim 6 wherein comprises a new step of dedoping after the removing (c) step and before (d) step by oxidation at least one zone area of the buckypaper, preferably said oxidation is by means of a photolysis reaction using $H_2O_2$ and UV radiation lamp.

8. Method according to claim 7, wherein a protecting of the buckypaper obtained in step c) before of the dedoping process of step d) is carried out by means of a spray-coated layer of acrylic lacquer applied through a shadow mask with a specific pattern.

9. Method according to any of claims 1 to 8, wherein further comprising additional step of depositing a battery electrode material onto the freestanding buckypaper obtained in step (d), preferably said deposition is via methods such as dip-coating, slot-die coating, blade-coating, spray coating or screen printing.

10. Method according to claim 9, wherein the battery electrode material deposited on the freestanding buckypaper is lithium titanate (LTO).

11. Method according to any of claims 9 or 10, wherein further comprising a step of folding the buckypaper into a thermoelectric module.

12. A buckypaper obtained by the method according to any of the claims 1 to 11.

13. Use of the buckypaper according to claim 12 as p-type active material, n-type active material and interconnecting material of an organic thermoelectric generator.

14. Use of the buckypaper according to claim 12 as a current collector of a battery.

15. A battery comprising a current collector, wherein the collector comprises the buckypaper obtained by method **characterized in that** comprising the following steps:

a) preparing a dissolved CNT salt using a procedure comprising the following step:

i) providing a stock solution of reductive alkali metal, preferably the alkali metal is selected from potassium or sodium, naphthalenide (Np) in a polar aprotic solvent, preferably the polar aprotic solvents are selected from dimethylacetamide (DMAc), dimethyl sulfoxide (DMSO) or tetrahydrofuran (THF);
ii) adding in the solution of step (i) a non-oxidizing atmosphere CNTs with a median length of at least 500nm;

b) depositing the solution obtained in a) via roll-to-roll compatible deposition method onto a porous filter used as temporary substrate, preferably the temporary substrates are porous PTFE filter sheets, in presence of an oxidizing atmosphere at a pressure of between 0,8 and 1,5 bar;
c) removing the solvent and partially drying the wet buckypaper obtained in b) by applying a rough vacuum across the porous filter substrate; and
d) the pre-dried buckypaper is then dried completely by applying heat and/or rough vacuum,

or the pre-dried buckypaper can be delaminated to form a freestanding film and then dried completely by applying heat and/or rough vacuum,
or it can be transferred onto another final substrate, preferably the final substrates are selected from PET, PEN, polyimine, aluminum foil or paper and then dried completely by applying heat and/or rough vacuum.

Fig. 1

Fig. 2

Fig. 3

**Fig. 4**

**Fig. 5**

**Fig. 6**

## EUROPEAN SEARCH REPORT

**Application Number**

EP 23 38 3283

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | DÖRLING BERNHARD ET AL: "Soluble alkali-metal carbon nanotube salts for n-type thermoelectric composites with improved stability", APPLIED PHYSICS LETTERS, AMERICAN INSTITUTE OF PHYSICS, 2 HUNTINGTON QUADRANGLE, MELVILLE, NY 11747, vol. 118, no. 21, 25 May 2021 (2021-05-25) , XP012256796, ISSN: 0003-6951, DOI: 10.1063/5.0047338 [retrieved on 2021-05-25] * the whole document * | 1-15 | INV. C01B32/168 C01B32/174 |
| X | VOIRY D ET AL: "Stoichiometric control of single walled carbon nanotubes functionalization", JOURNAL OF MATERIALS CHEMISTRY, ROYAL SOCIETY OF CHEMISTRY, GB, vol. 20, no. 21, 7 June 2010 (2010-06-07), pages 4385-4391, XP002608779, ISSN: 0959-9428, DOI: 10.1039/C0JM00082E [retrieved on 2010-04-19] * columns I - III * | 1-15 | |
| A | US 2020/052180 A1 (HAYASHI NAOYUKI [JP] ET AL) 13 February 2020 (2020-02-13) * paragraphs [0297] - [0332] * | 1-15 | **TECHNICAL FIELDS SEARCHED (IPC)** C01B |
| A | JEFFREY L BLACKBURN ET AL: "Carbon-Nanotube-Based Thermoelectric Materials and Devices", ADVANCED MATERIALS, VCH PUBLISHERS, DE, vol. 30, no. 11, 22 January 2018 (2018-01-22), page n/a, XP071871295, ISSN: 0935-9648, DOI: 10.1002/ADMA.201704386 * the whole document * | 1-15 | |

The present search report has been drawn up for all claims

| Place of search | Date of completion of the search | Examiner |
|---|---|---|
| Munich | 25 April 2024 | Lecerf, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 3283

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2024

| Patent document cited in search report | Publication date | Patent family member(s) | Publication date |
|---|---|---|---|
| US 2020052180 A1 | 13-02-2020 | JP WO2019003642 A1 | 16-04-2020 |
| | | US 2020052180 A1 | 13-02-2020 |
| | | WO 2019003642 A1 | 03-01-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DÖRLING, B. et al.** Soluble Alkali-Metal Carbon Nanotube Salts for n-Type Thermoelectric Composites with Improved Stability.. *Applied Physics Letters*, 2021, vol. 118 (21), 213901